# EUROPEAN PATENT APPLICATION

(11) **EP 1 749 604 A2**
(43) Date of publication of application: **07.02.2007**
(21) Application number: 05258053.7
(22) Date of filing: 23.12.2005
(51) Int. Cl.: B23G 1/26

(54) **Tap and die ratcheting wrench assembly**

(30) Priority: 05.08.2005 US 197908
(71) Applicant: Easco Hand Tools, Inc., Simsbury, CT 06070 (US)
(72) Inventor: Tuan-Mu, Hsien-Chung, Taichung Taiwan, R.O.C. (CN); Steinweg, Paul S., Litiz, Pennsylvania 17543 (US)
(74) Representative: Chettle, Adrian John

(57) **Abstract**

A ratchet wrench assembly for use with a tap and a die, comprising a wrench (100) having a first handle (104) and a head (102) at one end of the first handle (104) that defines an opening therethrough. A ratchet ring (108) is disposed in the head opening such that the ratchet ring (108) rotates with respect to the head portion (102) in a first direction and a second direction. The ratchet ring (108) defines a substantially cylindrical inner engaging surface (110) having a rib (112) projecting radially inwardly therefrom. An adapter (130,150) includes a lower portion (154) for receiving one of the tap (146) and the die (157) and a barrel portion (132,152) defining a depression (138,158) in an outer surface. The ratcheting ring (108) slidably receives the barrel portion (132,152) therein and the adapter (130,150) is therefore rotationally fixed to the ratchet ring (108) by the rib (112) and the depression (138,158) .

## Description

### FIELD OF THE INVENTION

The present invention relates generally to tap and die assemblies and their associated wrenches. More particularly, the present invention relates to a tap and die wrench assembly including a ratcheting feature.

### BACKGROUND OF THE INVENTION

Tap and die assemblies for threading holes and elongated shanks, respectively, are well known. Existing tap and die assemblies typically require specialized wrenches for holding and driving the various taps and dies during use. These Wrenches are specifically designed for holding a tap or die, and are not adequately suited for use with other tools, such as sockets, socket extensions, etc. Moreover, existing tap and die assemblies require that a separate wrench be used for a tap or a die requiring numerous tools.

### SUMMARY OF THE INVENTION

The present invention recognizes and addresses considerations of prior art constructions and methods. In one embodiment of the present invention, a wrench assembly includes a wrench having a first handle portion and a head portion at one end of the first handle portion, the head portion defining an opening. A ratchet ring is disposed in the opening such that the ratchet ring rotates with respect to the head portion in a first direction and rotates with the head portion in a second direction. The ratchet ring defines a substantially cylindrical inner engaging surface having a rib projecting radially inwardly therefrom. An adapter includes a lower portion for receiving one of the tap and the die and a barrel portion defining a depression in an outer surface. The depression slidably receives the rib therein when the barrel portion is inserted into the ratchet ring.

In another embodiment, a ratchet wrench for use with a tap adapter and a die adapter includes a first handle portion, a second handle portion, and a head portion disposed between the first and the second handle portions, the head portion defining an opening. A ratchet ring is located in the opening such that the ratchet ring rotates with respect to the head portion in a first direction and with the head portion in a second direction. The ratchet ring defines a substantially cylindrical inner engaging surface having a plurality of ribs projecting radially inwardly therefrom. Both the tap adapter and the die adapter include a barrel portion defining a plurality of depressions in an outer surface. The plurality of depressions is arranged such that each depression receives one of the ribs when the barrel portion is inserted into the ratchet ring.

In yet another embodiment, an adapter for holding a die for use with a ratchet wrench, the ratchet wrench having a head portion defining a substantially cylindrical inner engaging surface and a rib extending inwardly therefrom, includes a barrel portion defining a depression in an outer surface thereof and a lower portion defining a hexagonal recess for receiving the die. The depression slidably receives the rib when the barrel portion is inserted in the head portion of the ratchet wrench.

In another embodiment, an adapter for holding a tap for use with a ratchet wrench, the ratchet wrench having a head portion defining a substantially cylindrical inner engaging surface and a rib extending inwardly therefrom, includes a barrel portion defining a depression in an outer surface thereof and a plurality of fingers extending axially from the barrel portion. Each finger has a proximal end adjacent the barrel portion and a distal end having a threaded surface. A threaded member is rotatably received on the threaded surfaces of the fingers. Rotation of the threaded member in one direction urges the distal ends of the fingers inwardly so as to grip the tap, and rotation of the threaded member in an opposite direction allows the distal ends of the fingers to move outwardly and release the tap.

The accompanying drawings, which are incorporated in and constitute a part of this specification, illustrate one or more embodiments of the drill chuck and, together with the description, serve to explain the principles of the drill chuck.

### BRIEF DESCRIPTION OF THE DRAWINGS

A full and enabling disclosure of the present tap and die ratchet wrench assembly, including the best mode thereof, directed to one of ordinary skill in the art, is set forth in the specification, which makes reference to the appended drawings, in which:
Figs. 1A and 1B are top perspective and top plan views, respectively, of a ratchet wrench in accordance with an embodiment of the present disclosure;
Figs. 2A, 2B, and 2C are side, perspective, and bottom views, respectively, of a tap adapter for use with the ratchet wrench shown in Figs. 1A and 1B;
Figs. 3A, 3B, and 3C are exploded perspective, perspective, and bottom views, respectively, of a die adapter for use with the ratchet wrench shown in Figs. 1A and 1B;
Fig. 4 is a bottom view of an alignment disk of the die adapter shown in Figs. 3A through 3C;
Fig. 5 is a perspective view of a standard die for use with the die adapter shown in Figs. 3A through 3C;
Fig. 6 is a perspective view of a standard tap for use with the tap adapter shown in Figs. 2A through 2C;
Fig. 7 is a side view of the tap adapter shown in Figs. 2A through 2C inserted into the ratchet wrench shown in Figs. 1A and 1B;
Figs. 8A and 8B are a partial cut-away side and perspective view, respectively, of an extension for use with the ratchet wrench as shown in Figs. 1A and 1B;
Fig. 9 is a top view of an embodiment of a ratchet wrench in accordance with the present disclosure;
Figs. 10A and 10B are side and top perspective view, respectively, of an embodiment of a tap adapter for use with the ratchet wrench shown in Figs. 1A, 1B and Fig. 9;
Figs. 11A and 11B are side and perspective views, respectively, of an embodiment of an extension for use with the tap adapter shown in Figs. 10A and 10B;
Figs. 12A, 12B, and 12C are exploded perspective, perspective, and bottom views, respectively, of an embodiment of a tap adapter for use with the ratchet wrench shown in Figs. 1A, 1B and Fig. 9; and
Fig. 13 is a side view of the tap adapter body shown in Figs. 12A-12C.

Repeat use of reference characters in the present specification and drawings is intended to represent same or analogous features or elements of the drill chuck according to the disclosure.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation, not limitation, of the invention. In fact, it will be apparent to those skilled in the art that modifications and variations can be made in the present invention without departing from the scope and spirit thereof. For instance, features illustrated or described as part of one embodiment may be used on another embodiment to yield a still further embodiment. Thus, it is intended that the present invention covers such modifications and variations as come within the scope of the appended claims and their equivalents.

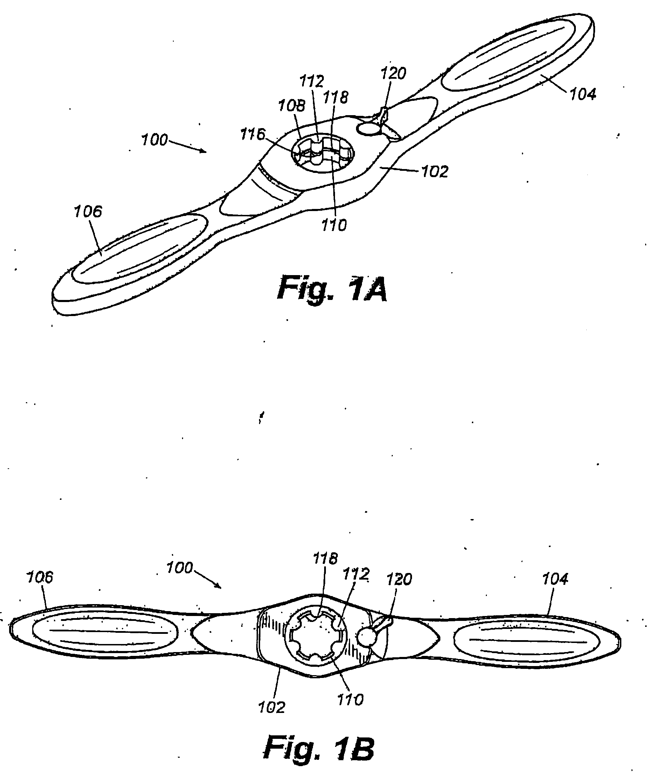

Referring to Figures 1A and 1B, a ratchet wrench 100 has a head portion 102, a first handle 104, and a second handle 106, the first and second handles extending from head portion 102 such that they oppose each other. A ratchet ring 108 is rotatably received in head portion 102 and includes an inner engaging surface 110 with a plurality of shaped ribs 112 extending inwardly therefrom. In one embodiment, the ribs are semi-cylindrically shaped. However, it should be understood that the ribs may have a triangular, square, oval or any other suitable cross-sectional shape. Each rib 112 includes a slot transverse to the axial direction of the ratchet ring axis and that aligns with the other slots to form a first annular groove 116. First annular groove 116 is configured to receive a ring 118, which may be a continuous pliable ring or a discontinuous spring ring. Ribs 112 and ring 118 are received in corresponding depressions and grooves, respectively, of a work piece, as discussed in greater detail herein.

Ratchet wrench 100 includes a lever 120 that allows a user to select the direction of rotation in which ratchet wrench 100 will apply torque to a work piece and the direction of rotation in which the wrench will ratchet about the workpiece. Lever 120 selectively controls a ratcheting mechanism (not shown) disposed within head portion 102 that engages an outer surface of ratchet ring 108. One example of a suitable ratcheting mechanism is disclosed in U.S. Patent No. 6,918,323, to Arnold, et al., the disclosure of which is incorporated by reference herein in its entirety.

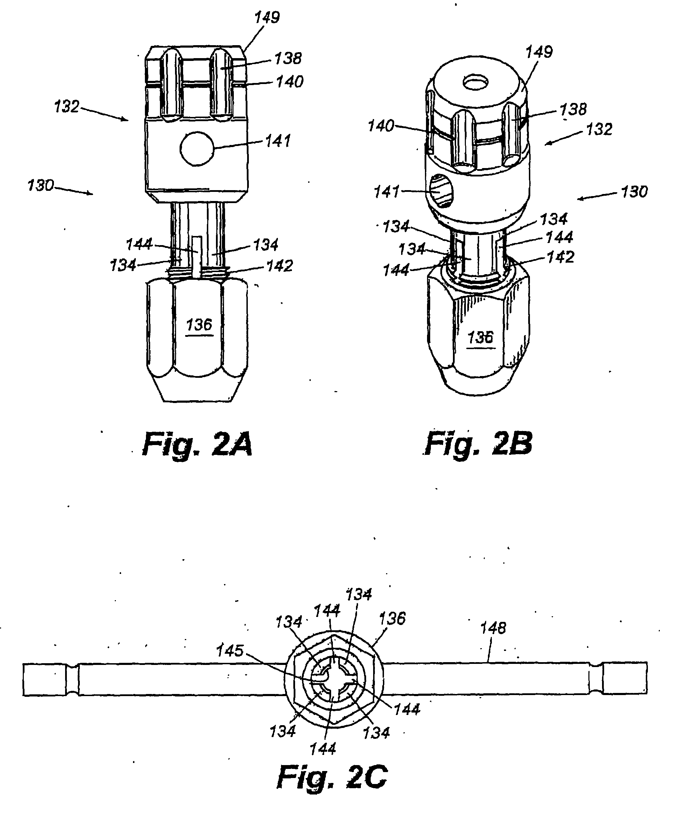

Referring now to Figures 2A through 2C, a tap adapter 130 in accordance with one embodiment of the present invention is shown. Tap adapter 130 includes a barrel portion 132, a plurality of fingers 134 extending axially therefrom, and a threaded nut 136 received on the distal ends of the fingers.

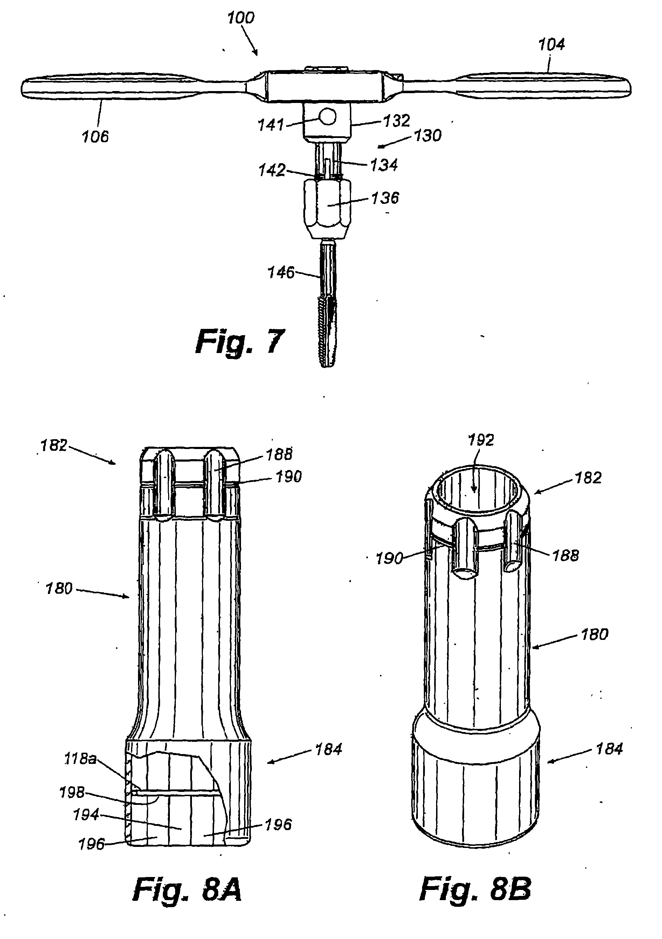

Barrel portion 132 includes a set of depressions 138 and a second annular groove 140. As shown, each depression 138 is semi-cylindrical in shape and spaced about barrel portion 132 so that the barrel portion is insertable into ratchet ring 108 (Figure 7). It should be understood that the shape of depressions 138 should correspond to the shape of ribs 112 so that barrel portion 132 is rotationally secured in ratchet ring 108. A second annular groove 140 is formed in the outer circumference of barrel portion 132 and aligns with groove 116 when barrel portion 132 is inserted into ratchet ring 108. As such, second annular groove 140 is positioned to receive portions of ring 118 to releasably secure tap adapter 130 in ratchet ring 108 in the axial direction, as shown in Figure 7. A chamfered edge 149 aides in the insertion of the tap adapter into ratchet ring 108.

Barrel portion 132 also includes a transverse bore 141 for slidably receiving a drive dowel 148 as shown in Figure 2C. As such, tap adapter 130 can be used for threading holes even when a ratcheting wrench is not available. In particular, dowel 148 is slipped through transverse bore 141 so that the dowel extends from opposite sides of barrel portion 132. Next, the user grasps the ends of drive dowel 148 on opposite sides of barrel portion 132 to apply torque in either rotational direction as desired.

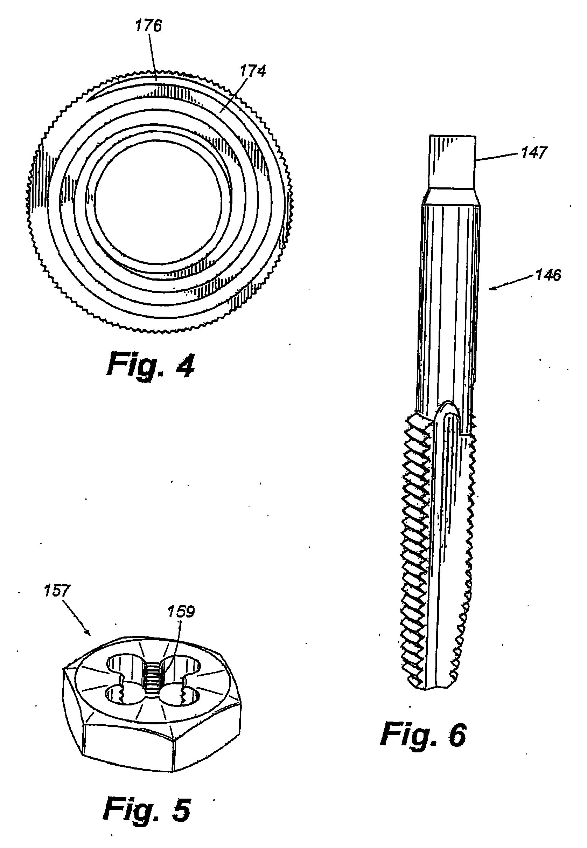

Each finger 134 is separated from adjacent fingers 134 by axial slots 144 and defines a threaded surface 142 at a distal end thereof. As best seen in Figure 2C, as threaded nut 136 is rotated in a clockwise direction, the distal ends of fingers 134 are biased radially inward until an inner surface 145 of each finger 134 engages a drive boss 147 of a tap 146 (Figure 6). Threaded nut 136 is further rotated until tap 146 is adequately secured for use. As shown in Figure 6, tap 146 includes a square drive boss 147. However, inner surfaces 145 of fingers 134 (Figure 2C) may be configured in any desired fashion so that they properly engage different shaped drive bosses 147. As best seen in Figure 7, tap adapter 130, with tap 146 secured therein, is secured within ratchet wrench 100 and ready for use. Rotation of threaded nut 136 in a counterclockwise direction (looking up toward the wrench) allows fingers 134 to move radially outward so that the tap can be removed from the tap adapter after use.

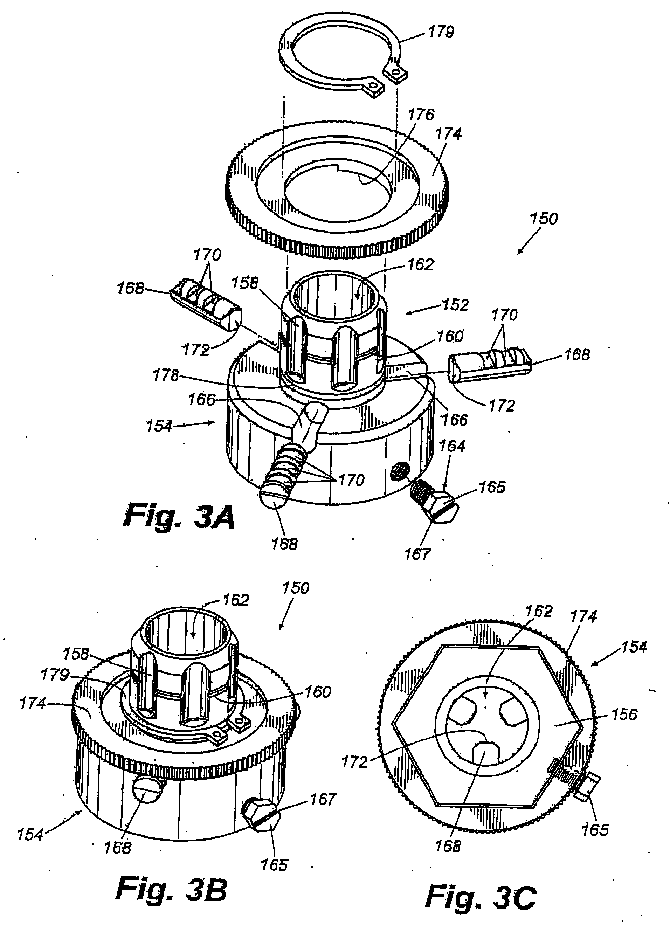

Referring now to Figures 3A-3C, a die adapter 150 includes a generally cylindrical barrel portion 152 and a generally cylindrical lower portion 154 defining a recess 156 formed therein (Figure 3C). In one embodiment, recess 156 is hexagonally shaped in cross-section to receive a standard hexagonally shaped die. However, it should be understood that recess 156 may have any desired cross-sectional shape, including circular, square or other polygonal shape, depending on the die adapter's use.

Similar to tap adapter 130, barrel portion 152 includes a set of depressions 158 and a second annular groove 160 formed on an outer circumference. As previously described, depressions 158 and second annular groove 160 are configured such that barrel portion 152 is slidably received and selectively secured in ratchet ring 108, similar to the tap adapter. A continuous axial bore 162 is formed through barrel portion 152 and lower portion 154 to allow passage of a rod, stud, elongated member, etc., therethrough while being threaded by the die. A threaded fastener 164 is threadedly received in a radially extending aperture in lower portion 154 to axially secure a die inserted into recess 156. The fastener can have a polygonal shaped head 165 to allow a user to easily rotate the fastener in the tightening or loosening direction. Alternatively, the head can be knurled for increased gripability and may also define a slot 167 so that the fastener can be tightened with a screw driver.

Die adapter lower portion 154 includes a plurality of radial grooves 166 that extend from the die adapter outer surface into axial bore 162. Each radial groove 166 is configured to slidably receive a corresponding guide pin 168 that includes grooves 170 disposed in its upper surface and an end face 172 proximate axial bore 162. An alignment disk 174 that includes a spiraled land 176 extending downward from its lower surface is located adjacent lower portion 154 so that land 176 is slidably received in grooves 170. Land 176 and grooves 170 are configured such that rotation of alignment disk 174 causes guide pins 168 to be urged radially inward into axial bore 162 or radially outward from axial bore 162, depending on the direction of rotation. As shown, a retainer groove 178, formed in barrel portion 152, receives a C-clip 179 that axially secures alignment disk 174 adjacent lower portion 154. The guide pins are used to center a workpiece being threaded by the die so that the axis of the workpiece is concentric with the axis of the die. As best seen in Figure 3C, the side edges of each guide pin's end face 172 are beveled so that the end faces 172 may be used to engage workpieces having relatively small diameters.

To use die adapter 150, a user selects a desired die 157 (Figure 5), places the die in recess 156 and secures it therein by engaging die 157 with threaded fastener 164. Once the die is secured in the adapter, die adapter barrel portion 152 is inserted into ratchet ring 108. Die adapter 150 can accommodate elongated members (not shown) having diameters approaching the diameter of axial bore 162. As best seen in Fig. 3C, depending upon the diameter of the elongated member to be threaded, it may be necessary to rotate alignment disk 174 to retract guide pins 168 from axial bore 162 so as not to impede passage of the elongated member therethrough as the die threads the elongated member. For example, the user engages a free end of the elongated member with die threaded projections 159 (Figure 5) and rotates ratchet wrench 100. As ratchet wrench 100 is rotated, the leading thread of each threaded projection 159 bites into the material of the elongated member and cuts a thread into the outer circumference of the elongated member. Continued rotation of ratchet wrench 100 about the elongated member causes subsequent threads on each threaded projection to follow in the threads previously formed on the elongated member by the proceeding threads on each threaded projection 159. As such, ratchet wrench 100 is drawn downwardly along the length of the elongated member such that the elongated member begins to extend and move through axial bore 162. Once the leading end of the elongated member is adjacent guide pins 168, alignment disk 174 may be rotated clockwise to urge guide pins 168 inwardly until their end faces 172 abut the elongated member. As such, guide pins 168 serve as points of contact to help maintain the concentric orientation of ratchet wrench 100, die 157 and the elongated member.

Referring now to Figures 8A and 8B, an extension 180 for use with ratchet wrench 100, tap adapter 130, and die adapter 150 includes a generally cylindrical barrel portion 182 and a receptacle end 184. Similar to barrel portion 132 of tap adapter 130, barrel portion 182 includes a plurality of depressions 188 and a second annular groove 190. Depressions 188 and second annular groove 190 are configured to receive nbs 112 and ring 118 of ratchet ring 108, respectively. Similar to ratchet ring 108, receptacle end 184 includes an inner engaging surface 194 with a plurality of ribs 196 extending inwardly therefrom. The ribs are preferably shaped to fit into the depressions formed in the tap and die adapters, and in one embodiment the ribs are senu-cylindrical in shape. Each rib 196 includes a slot, the slots being aligned so as to form an annular groove 198 that receives a ring member 118a. Additionally, extension 180 includes an axial bore 192 extending therethrough. Extension 180 may be used to secure both tap adapter 130 and die adapter 150 to ratchet wrench 100. Bore 192 allows the elongated member to pass through extension 180 when used with the die adapter.

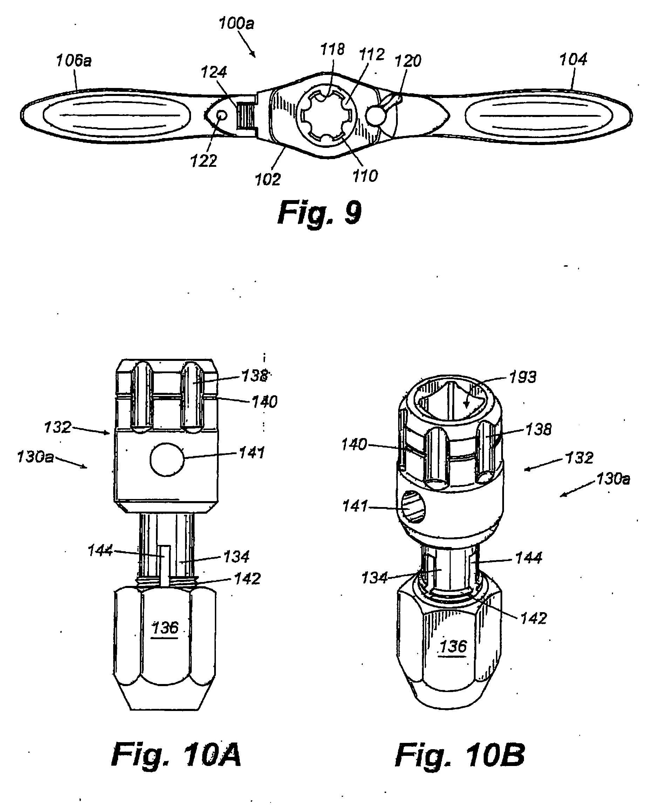

Referring now to Figure 9, an alternate embodiment of a ratchet wrench 100a is constructed similarly to ratchet wrench 100 shown in Figures 1A and 1B, with the additional element of a pivotally mounted handle 106a. Handle 106a is pivotally mounted to head portion 102 and locked into place by a detent 122 that a user operates to selectively engage a plurality of teeth 124 formed on head portion 102. In one embodiment, detent 122 includes a ball and spring (not shown) that is housed in a bore (hot shown) formed in the handle end adjacent teeth 124. The spring biases the ball outward into engagement with teeth 124 to lock the handle into position. A button in the handle is in operative engagement with the spring and ball such that when the button is depressed, the ball can be urged into the bore against the outward bias of the spring so that the handle can be pivoted to the desired position, at which time the user releases the button and allows the ball to re-engage the plurality of teeth 124. This feature is desirable when tap and die operations are being conducted in areas of limited accessibility. It should be understood that other forms of detents may be used for example, a spring that biases a ball or pin into engagement with teeth 124.

Referring now to Figures 10A and 10B, an alternate embodiment of a tap adapter 130a in accordance with the present invention is constructed similarly to tap adapter 130 shown in Figures 2A through 2C, with the exception that a square receiver 193 is formed in the upper surface of barrel portion 132 and is configured to receive a square drive tang of a standard ratchet wrench. As such, tap adapter 130a can be used with standard ratchet wrenches as well as ratchet wrenches according to the present invention. It should be understood that die adapter 150 may also be formed with a square receiver to allow the tie adapter to be used with a standard ratchet wrench.

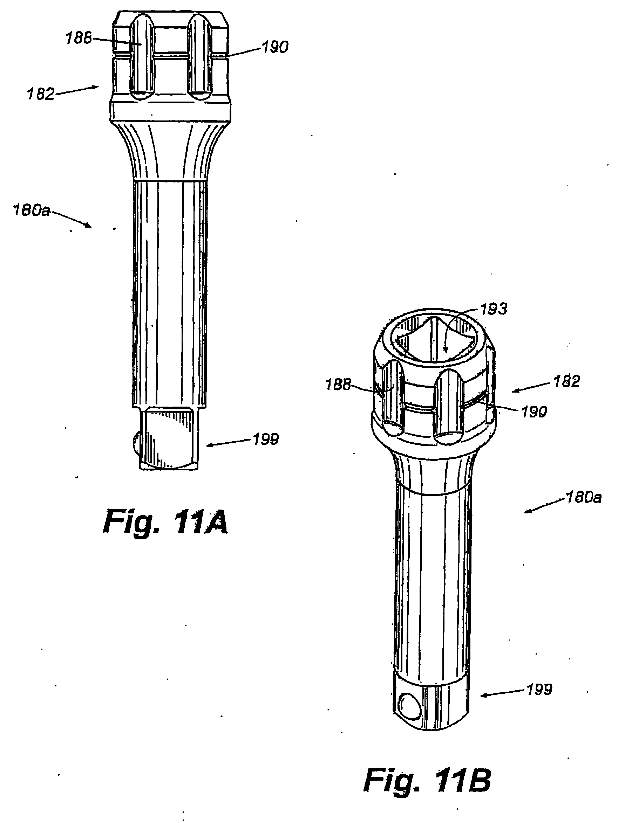

Referring now to Figures 11A and 11B, an alternate embodiment of an extension 180a in accordance with the present invention is disclosed. Extension 180a includes a barrel portion 182 with a plurality of depressions 188 and a second annular groove 190 formed therein. A square receiver 193 is formed in an upper surface of barrel portion 182. As such, extension 180a can be used with both standard ratchet wrenches having square drive tangs as well as ratchet wrenches in accordance with the present invention. Extension 180a also includes a square drive boss 199 opposite barrel portion 182. This permits extension 180a to be used with tap adapter 130a shown in Figures 10A and 10B as well as standard socket sets having square receivers.

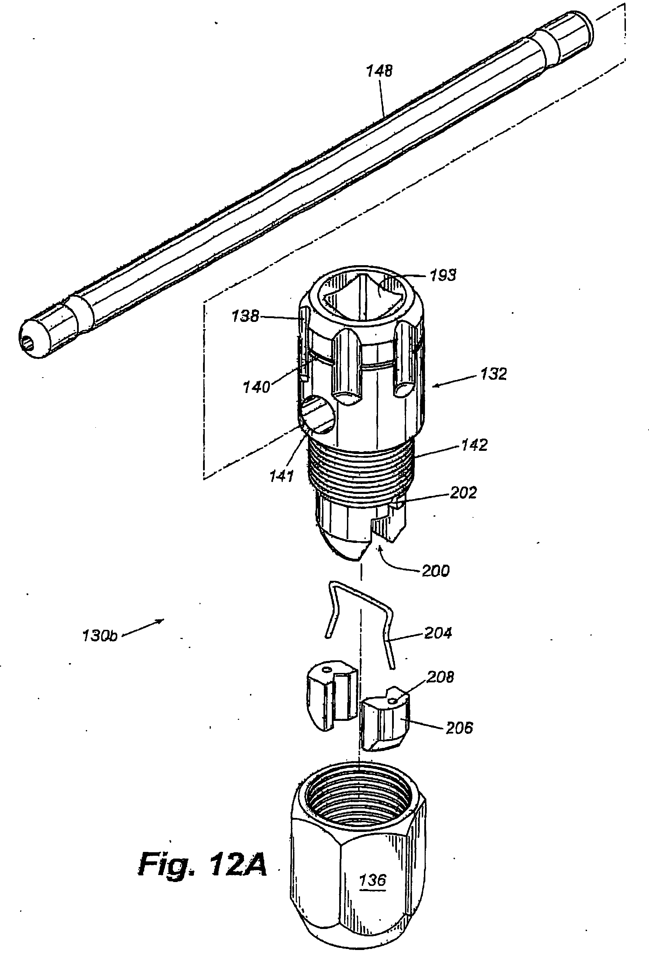

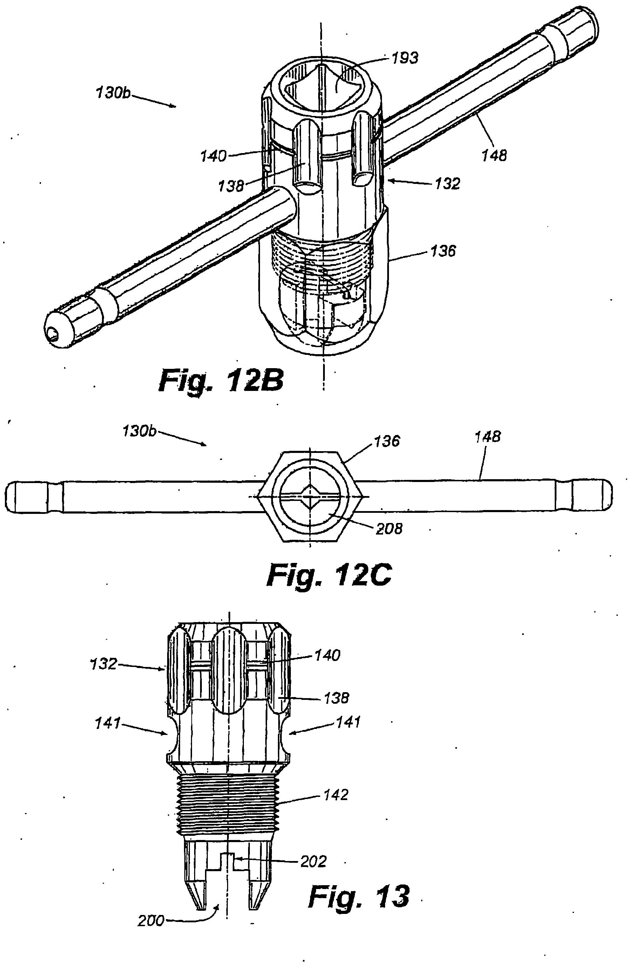

Referring now to Figures 12A-12C, an alternate embodiment of a tap adapter 130b is shown with first and second transverse grooves 200 and 202, respectively, formed in the end opposite barrel portion 132. Second transverse groove 202 receives a base portion of a U-shaped spring 204. A pair of gripping blocks 206, slidably disposed in first transverse groove 200, each have an aperture 208 for receiving one of the spring's free ends and an inner face for engaging tap drive boss 147 (Figure 6). Thus, as threaded nut 136 is rotated with respect to tap adapter 130b, an inner surface of nut 136 acts on the beveled forward end of each gripping block 206 urging the blocks inwardly against the outward bias of the spring into engagement with the tap. Note, tap adapter 130b can be shortened by omitting optional transverse bore 141 (Figure 13).

While one or more preferred embodiments of the invention are described above, it should be appreciated by those skilled in the art that various modifications and variations can be made in the present invention without departing from the scope and spirit thereof. For example, the tap and die adapters can be used with non-ratcheting wrenches. As well, the correspondingly shaped ribs and depressions may be formed with various cross-sectional shapes, such as, but not limited to, triangular, square, rectangular, trapezoidal, etc. It is intended that the present invention cover such modifications and variations as come within the scope and spirit of the appended claims and their equivalents.

## Claims

1. A ratchet wrench assembly for use with a tap and a die, comprising:
a. a wrench having a first handle and a head at one end of said first handle, said head defining an opening defining an axis therethrough;
b. a ratchet ring disposed in said opening such that said ratchet ring rotates with respect to said head about said axis in a first rotational direction and rotates with said head in a second rotational direction opposite said first rotational direction, said ratchet ring defining a substantially cylindrical inner engaging surface having at least one rib projecting radially inward from said inner engaging surface; and
c. an adapter having
a generally cylindrical lower portion for receiving one of a tap and a die and
a barrel portion defining at least one depression in an outer surface thereof for releasably receiving said at least one ratchet ring rib therein when said barrel portion is inserted into said ratchet ring inner engaging surface.

2. The ratchet wrench assembly of claim 1, further comprising a second handle extending radially outward from said head opposite from said first handle.

3. The ratchet wrench assembly of claim 1, wherein:
a. said ratchet ring defines a plurality of said ribs, each said rib having a slot transverse to an axis of said ratcheting ring, said ratchet ring slots aligning with each other to form a first annular groove;
b. said adapter barrel portion defining a second annular groove in said barrel portion outer surface and positioned to align with said ratchet ring first annular groove when said barrel portion is inserted into said ratchet ring inner engaging surface; and
c. a ring member is received in said first and said second annular grooves so as to releasably retain said adapter in said ratchet ring.

4. The ratchet wrench assembly of claim 1, wherein said generally cylindrical lower portion of said adapter further defines a hexagonal recess to removably receive the die.

5. The ratchet wrench assembly of claim 4, said adapter farther comprising an axial bore extending through said generally cylindrical lower portion and said barrel portion.

6. The ratchet wrench assembly of claim 5, further comprising:
a. a plurality of radial bores angulatly spaced through said adapter generally cylindrical lower portion, each said radial bore extending from a lower portion outer surface to said axial bore;
b. a plurality of guide pins slidably received in a respective said radial bore; and
c. an alignment disk operatively coupled to each said guide pin so that rotation of said alignment disk in a first direction causes said guide pins to move radially inward toward said axial bore and rotation in a second opposite direction causes said guide pins to move radially outward away from said axial bore.

7. The ratchet wrench assembly of claim 1, said adapter further comprising:
a. a plurality of fingers extending axially from said barrel portion, each said finger having a proximal end adjacent said barrel portion and a distal end having a threaded surface on an outer surface thereof; and
b. a threaded nut threadedly received on said fingers;
wherein rotation of said threaded nut in one direction urges said distal ends of said fingers inward so as to grip the tap, and rotation of said threaded nut in an opposite direction allows said finger distal ends to move outward and release the tap.

8. The ratchet wrench assembly of claim 7 further comprising at least four fingers.

9. A ratchet wrench for use with a tap adapter and a die adapter, comprising:
a. a wrench having a first handle, a second handle, and a head disposed between said first and said second handles, said head defining an opening defining an axis therethrough;
b. a ratchet ring located in said opening such that said ratchet ring rotates with respect to said head- about said axis in a first rotational direction and with said head portion in a second rotational direction opposite said first rotational direction, said ratchet ring defining a substantially cylindrical inner engaging surface having a plurality of ribs projecting radially inward therefrom; and
c. an adapter including a barrel portion defining a plurality of depressions in an outer surface, said plurality of depressions being arranged such that each said depression slidably receives one of said plurality of radially inwardly extending ratchet ribs when said barrel portion is inserted into said ratchet ring.

10. The ratchet wrench of claim 9, wherein said second handle is pivotally mounted to said head.

11. The ratchet wrench of claim 9, wherein:
a. a slot is formed in each said plurality of radially inwardly extending ratchet ribs transverse to an axis of said ratchet ring, said slots forming a first annular groove;
b. a second annular groove is formed in an outer surface of said barrel portion; and
c. a ring is disposed in said first annular groove, wherein said ring engages said second annular groove to releasably retain said barrel member when inserted in said ratchet ring.

12. The ratchet wrench of claim 9 wherein each said plurality of radially inwardly extending ratchet ribs is polygonal in cross-section.

13. An adapter for holding a die for use with a ratchet wrench, the ratchet wrench having a head defining a substantially cylindrical inner engaging surface and at least one rib extending inward therefrom, comprising:
a. a generally cylindrical barrel portion defining at least one depression in an outer surface thereof; and
b. a generally cylindrical lower portion defining a polygonal recess for receiving the die; and
c. wherein said at least one depression slidably receives the at least one inward extending rib when said barrel portion is inserted in the head portion of the ratchet wrench.

14. The adapter of claim 13, further comprising a threaded member threadedly received in said generally cylindrical lower portion, said threaded member being radially movable into and out of said polygonal recess to releasably secure the die in said polygonal recess.

15. The adapter of claim 13, further comprising an axial bore extending along a longitudinal center axis of said adapter.

16. The adapter of claim 13, wherein:
a. said adapter generally cylindrical lower portion defines a plurality of radial bores, each said radial bore extending from an outer surface of said generally cylindrical lower portion into said axial bore;
b. a plurality of guide pins one slidably received in a respective said radial bore; and
c. an alignment disk operatively coupled to each said guide pin such that rotation of said alignment disk in a first rotational direction causes said plurality of guide pins to move radially inward and rotation in an opposite second direction causes said plurality of guide pins to move radially outward.

17. The adapter of claim 13, wherein:
said inner engaging surface includes a plurality of said ribs extending radially inward therefrom, each said rib defining a transverse slot, said transverse slots aligning with each other to form a first annular groove;
said barrel portion outer surface defines a second annular groove positioned so that said first and said second annular grooves align when said barrel portion is inserted in said head; and
a ring received intermediate said first and said second annular grooves to releasably retain said adapter in said head.

18. An adapter for holding a tap for use with a ratchet wrench, the ratchet wrench having a head portion defining a substantially cylindrical inner engaging surface and a plurality of ribs extending radially inwardly therefrom, comprising:
a. a barrel portion defining a plurality of depressions in an outer surface thereof, said parallel portion being releasably received by said substantially cylindrical inner engaging surface;
b. a plurality of fingers extending axially from said barrel portion, each said finger having a proximal end adjacent said barrel portion, a distal end, and a threaded surface therebetween; and
c. a threaded nut rotatably received on said finger threaded surfaces, wherein rotation of said threaded nut in one direction urges said distal ends of said fingers inwardly so as to grip the tap, and rotation of said threaded nut in an opposite direction allows said distal ends of said fingers to move outwardly and release the tap.

19. The adapter of claim 18 further comprising at least four fingers.
